# EUROPÄISCHE PATENTSCHRIFT

(11) **EP 3 411 939 B1**
(45) Veröffentlichungstag und Bekanntmachung des Hinweises auf die Patenterteilung: **06.05.2020**
(21) Anmeldenummer: 17702584.8
(22) Anmeldetag: 26.01.2017
(51) Int. Cl.: H02K 3/50, H02K 11/25, H02K 11/27, H02K 11/33

(54) **ELEKTRISCHE MASCHINE MIT EINER VERBINDUNG ZWISCHEN EINER STATORWICKLUNG UND EINER PLATINE DER ELEKTRISCHEN MASCHINE**
ELECTRICAL MACHINE WITH A CONNEXION BETWEEN A STATOR WINDING AND A CIRCUIT BOARD OF THE ELECTRICAL MACHINE
MACHINE ÉLECTRIQUE AVEC UNE CONNEXION ENTRE UNE BOBINAGE DE STATOR ET UNE PLATINE DE MACHINE ÉLECTRIQUE

(30) Priorität: 01.02.2016 DE 102016201447
(43) Veröffentlichungstag der Anmeldung: 12.12.2018
(73) Patentinhaber: Continental Automotive GmbH, 30165 Hannover (DE)
(72) Erfinder: JASTER, Magnus, 14774 Kirchmöser (DE); KRAUSE, Robert, 10409 Berlin (DE)
(86) Internationale Anmeldenummer: PCT/EP2017/051694
(87) Internationale Veröffentlichungsnummer: WO 2017/133961

(56) Entgegenhaltungen:
- WO-A1-03/001646
- JP-A- 2008 211 945
- JP-B2- 4 877 265
- US-A1- 2015 333 602

## Beschreibung

Die Erfindung betrifft eine elektrische Maschine mit einer Verbindung zwischen einer Statorwicklung und einer Platine eines Inverters der elektrischen Maschine.

Hybridsysteme mit elektrischen Maschinen umfassen typischerweise einen Elektromotor und einen von dem Elektromotor getrennten Inverter, wobei der Elektromotor und der Inverter durch Kabel miteinander verbunden sind. Weiterhin sind Hybridsysteme mit integrierten Lösungen bekannt, gemäß welchen der Elektromotor und der Inverter in einem gemeinsamen Gehäuse integriert sind.

Eine wichtige Aufgabe ist die Anbindung der Statorwicklung an eine Leistungsendstufe des Inverters. Diesbezüglich ist es bekannt, Stromschienen in Verbindung mit einem Kunststoffhalter zu verbauen, um eine Verbindung zwischen der Statorwicklung und der Platine bzw. deren Leistungsendstufe herzustellen. Eine solche Verbindung ist sehr komplex. Die Verbindung der Statorwicklung mit der Leistungsendstufe wird beispielsweise mittels gebogener und verlöteter Stromschienen realisiert, was zum einen die Materialkosten erhöht, zum anderen aber auch die Produktionskosten.

Zudem muss typischerweise eine Temperaturmessung des Stators auf Grund einer thermischen Anbindung von Statorwicklung und Inverter durch einen externen Sensor realisiert werden, der über einen Stecker an den Inverter geführt wird, was ebenfalls aufwändig ist. Ferner kann durch komplexe Geometrien und mehrfache Lagerungen der Stromschienen mit einhergehenden Wärmeübergängen kaum ein Rückschluss auf die Temperatur der Wicklung erfolgen.

Die JP 2008 211 945 A beschreibt eine Phasenantriebsvorrichtung bei der ein Leiter einer Wicklung eines Stators über eine Schraubverbindung mit einem Ausgang auf einer Leiterplatte angeordneten Leistungsmodul verbunden ist.

Die JP 4 877 265 B2 beschreibt eine elektrische Servolenkung und ein entsprechendes Herstellungsverfahren bei der Windungsenden über eine Anschlussklemme mit einer Leiterplatte verbunden sind.

Die US 2015 333 602 A1 beschreibt ein Verfahren zur Integration eines Antriebsmotors und eines Inverters.

Die WO 03/00 1646 A1 beschreibt eine Relaisträgervorrichtung für einen Elektromotor.

Es ist daher die Aufgabe der vorliegenden Erfindung, eine elektrische Maschine mit einer Stromverbindung der eingangs genannten Art bereitzustellen, die eine mechanische Entkopplung der Phasenanschlüsse von der Platine ermöglicht und einen reduzierten Bauraum aufweist.

Die Aufgabe wird gelöst durch die Merkmale des unabhängigen Patentanspruchs 1. Vorteilhafte Ausführungsformen sind Gegenstand der abhängigen Ansprüche, der folgenden Beschreibung sowie der Figuren.

Die erfindungsgemäße elektrische Maschine mit einer Verbindung zwischen einer Statorwicklung und einer Platine eines Inverters der elektrischen Maschine zeichnet sich dadurch aus, dass ein sich in z-Richtung erstreckendes Windungsendstück der Statorwicklung direkt mit der Platine verschweißt ist, auf welcher sich eine Leistungsendstufe des Inverters befindet.

Das Windungsendstück bildet erfindungsgemäß einen Bestandteil eines Phasenanschlusses des Wickelkopfes aus, wobei in einer elektrischen Maschine typischerweise mehrere Phasenanschlüsse mit jeweils einem Windungsendstück vorgesehen sind, welche durch die erfindungsgemäße Verbindung mit der Platine des Inverters verbunden werden. Die Platine des Inverters umfasst eine Leistungselektronik und eine Leistungsendstufe des Inverters. Die z-Richtung verläuft parallel zu einer Längsachse eines Elektromotors der elektrischen Maschine. Durch die direkte Verschweißung oder formschlüssige Verbindung des Windungsendstückes mit der Platine können aufwändige Stromschienen oder Lyrabögen entfallen. Zudem kann die Anzahl von Schweiß- und Lötstellen zwischen dem Windungsendstück und der Platine, insbesondere deren Leistungsendstufe, verringert werden, was eine Reduzierung von Fehlermöglichkeiten und von Leitungswiderständen ermöglicht. Zudem ergibt sich ein deutlich vereinfachter Produktionsprozess.

Erfindungsgemäß ist vorgesehen, dass die Platine einen in z-Richtung elastischen Verbindungsabschnitt ausbildet, mit welchem das Windungsendstück verschweißt ist. Hierbei nimmt der Verbindungsabschnitt die Form einer in z-Richtung elastischen Lasche oder Zunge an und wird durch Fräsen aus der Platine hergestellt. Diese Ausführungsform leistet einen Beitrag, mechanische Spannungen abzufangen, welche durch eine temperaturbedingte Ausdehnung des Materials des Windungsendstücks, insbesondere Kupfer, in z-Richtung entstehen, indem eine Elastizität des Verbindungsabschnitts gegenüber dem restlichen Teil der Platine hergestellt wird. Diese Ausführungsform ermöglicht somit eine mechanische Entkopplung der Phasenanschlüsse von der Platine. Weiterhin ist vorteilhaft vorgesehen, dass ein Sensor zur Strommessung auf den Verbindungsabschnitt gelötet ist. Der Verbindungsabschnitt pro Phasenanschluss sollte möglichst kurz gehalten werden, um einen Leitungswiderstand zu minimieren. Der Platz auf dem Verbindungsabschnitt wird gemäß dieser Ausführungsform optimal genutzt, um den Widerstand zur Strommessung zu verwenden. Somit wird ein Beitrag geleistet, eine dezentrale Strommessung der Statorwicklung in die Platine zu integrieren.

Besonders bevorzugt umfasst der Sensor einen Kupferstreifen oder einen Shunt, welche für die Strommessung besonders gut geeignet sind.

Ein weiterer Sensor zur Temperaturmessung kann ebenfalls auf den Verbindungsabschnitt gelötet sein. Mittels einer gemessenen Temperatur im Bereich des Verbindungsabschnitts können Rückschlüsse auf die Temperatur der Statorwicklung gezogen werden. Somit wird ein Beitrag geleistet, eine dezentrale Temperaturmessung der Statorwicklung in die Platine zu integrieren. Eine gesonderte Verbindung des weiteren Sensors mit der Platine über einen Stecker kann entfallen.

Besonders bevorzugt umfasst der weitere Sensor einen NTC-Temperatursensor oder einen SMD-Temperatursensor, welche für die Temperaturmessung besonders gut geeignet sind.

Der Kupferstreifen oder der Shunt kann über den Verbindungsabschnitt hinausstehen und mit dem Windungsendstück verschweißt sein. Dies sorgt für eine besonders haltbare Anbindung des Sensors, da bestimmtes Material der Platine bzw. des Verbindungsabschnitts unter Umständen nicht direkt schweißbar ist.

Eine erfindungsgemäße elektrische Maschine umfasst einen Inverter und eine vorstehend beschriebene erfindungsgemäße Verbindung.

Im Folgenden werden Ausführungsbeispiele der Erfindung anhand der grob schematischen und nicht maßstabsgetreuen Zeichnung näher erläutert. Hierbei zeigt:
- Fig. 1: eine Längsschnitt-Darstellung durch eine elektrische Maschine mit einem Elektromotor und einem Inverter,
- Fig. 2: eine Seitenansicht eines Ausführungsbeispiels einer erfindungsgemäßen Verbindung und
- Fig. 3: eine Draufsicht auf die Verbindung nach Fig. 2.

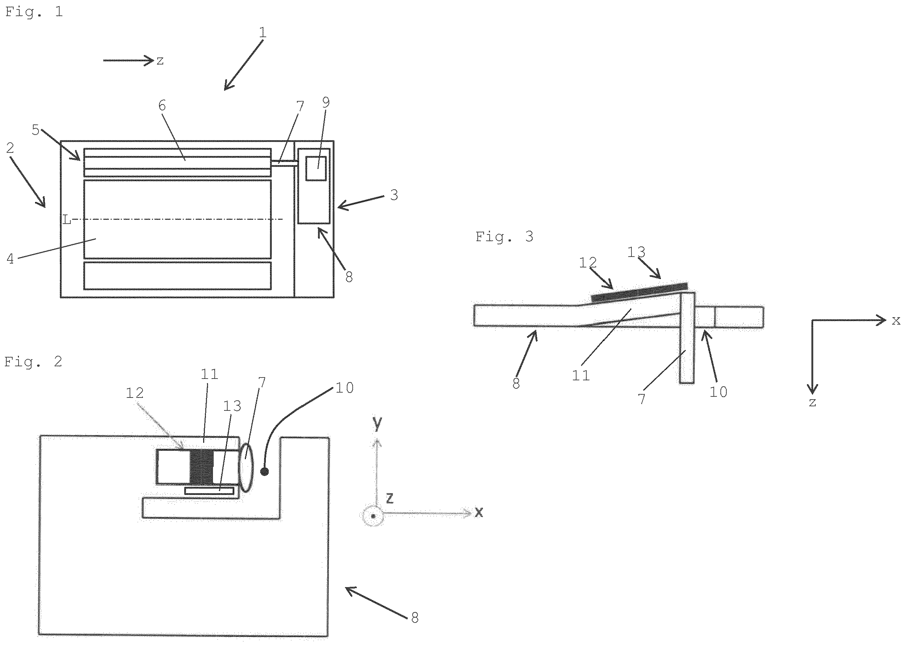

Fig. 1 zeigt eine elektrische Maschine 1 mit einem Elektromotor 2 und einem Inverter 3. Der Elektromotor 2 weist einen um eine Längsachse L rotierenden Rotor 4 und einen Stator 5 auf. Der Stator 5 umfasst eine Statorwicklung 6 und Phasenanschlüsse mit Windungsendstücken 7, welche in einer zu der Längsachse L parallelen z-Richtung verlaufen. Eines der Windungsendstücke 7 ist in Fig. 1 dargestellt. Der Inverter 3 umfasst eine Platine 8, welche eine Leistungsendstufe 9 enthält. Die Windungsendstücke 7 sind mit der Platine 8 mittels einer durch Fig. 2 und 3 gezeigten Verbindung miteinander verbunden.

Fig. 2 und 3 zeigen das Windungsendstück 7 und die Platine 8, welche eine Ausfräsung 10 aufweist. Durch die Ausfräsung 10 wird ein in z-Richtung elastischer Verbindungsabschnitt 11 der Platine 8 in Form einer elastischen Lasche bzw. einer elastischen Zunge ausbildet. Das Windungsendstück 7 ist direkt mit dem Verbindungsabschnitt 11 verschweißt. Dadurch wird die Verbindung zwischen der Statorwicklung 6 und der Platine 8 hergestellt.

Der in z-Richtung elastische Verbindungsabschnitt 11 kann mechanische Spannungen abfangen, welche durch eine temperaturbedingte Ausdehnung von Kupfer des Windungsendstücks 7 entstehen. Dadurch kann eine Elastizität des Verbindungsabschnitts 11 zum restlichen Teil der Platine 8 hergestellt werden. Auf das Verbindungsstück 11 ist ein Sensor 12, z.B. in Form eines Kupferstreifens oder eines Shunts, gelötet. Der Sensor 12 ist dazu eingerichtet, Stromstärken im Bereich des Verbindungsstücks 11 zu messen.

Weiterhin ist auf das Verbindungsstück 11 ein weiterer Sensor 13, z.B. in Form eines NTC-Temperatursensors oder eines SMD-Temperatursensors, gelötet. Der weitere Sensor 13 ist dazu eingerichtet, Temperaturen im Bereich des Verbindungsstücks 11 zu messen. Mittels einer gemessenen Temperatur kann auf die Temperatur der Statorwicklung 6 geschlossen werden.

Da bestimmtes Material der Platine 8 nicht direkt verschweißt werden kann, kann der aufgelötete Sensor 12 ein Stück weit über das Verbindungsstück 11 der Platine 8 hinausstehen und direkt mit dem Windungsendstück 7 verschweißt sein.

## Patentansprüche

1. Elektrische Maschine (1) umfassend
- einen Elektromotor (2), der einen um eine Längsachse (L) des Elektromotors (2) rotierenden Rotor (4) und einen Stator (5) aufweist, wobei der Stator (5) einen Statorwicklung (6) und Phasenanschlüsse mit Windungsendstücken (7) aufweist, welche in einer zur Längsachse (L) des Elektromotors (2) parallelen z-Richtung (z) verlaufen,
- einen Inverter (3), der eine Platine (8) aufweist, auf welcher sich eine Leistungsendstufe (9) des Inverters (3) befindet, und
- eine Verbindung zwischen der Statorwicklung (6) und der Platine (8), wobei die Platine (8) eine Ausfräsung (10) aufweist, **dadurch gekennzeichnet, dass** durch die Ausfräsung (10) ein in z-Richtung (z) elastischer Verbindungsabschnitt (11) in Form einer elastischen Lasche oder einer elastischen Zunge ausgebildet ist, mit welchem ein sich in z-Richtung (z) erstreckendes Windungsendstück (7) der Statorwicklung (6) direkt verschweißt ist.

2. Elektrische Maschine nach Anspruch 1, **dadurch gekennzeichnet, dass** ein Sensor (12) zur Strommessung auf den Verbindungsabschnitt (11) gelötet ist.

3. Elektrische Maschine nach Anspruch 2, **dadurch gekennzeichnet, dass** der Sensor (12) einen Kupferstreifen oder einen Shunt umfasst.

4. Elektrische Maschine nach einem der Ansprüche 1 bis 3, **dadurch gekennzeichnet, dass** ein weiterer Sensor (13) zur Temperaturmessung auf den Verbindungsabschnitt (11) gelötet ist.

5. Elektrische Maschine nach Anspruch 4, **dadurch gekennzeichnet, dass** der weitere Sensor (13) einen NTC-Temperatursensor oder einen SMD-Temperatursensor umfasst.

6. Elektrische Maschine nach Anspruch 3, **dadurch gekennzeichnet, dass** der Kupferstreifen oder Shunt über den Verbindungsabschnitt (11) hinaussteht und mit dem Windungsendstück (7) verschweißt ist.

## Claims

1. Electric machine (1) comprising
- electric motor (2) which has a rotor (4), which rotates around a longitudinal axis (L) of the electric motor (2), and a stator (5), wherein the stator (5) has a stator winding (6) and phase terminal connections having coil end pieces (7), which run in a z direction (z) parallel to the longitudinal axis (L) of the electric motor (2),
- an inverter (3) which has a circuit board (8) on which a power output stage (9) of the inverter (3) is located, and
- a connection between the stator winding (6) and the circuit board (8), wherein the circuit board (8) has a milled-out portion (10),
**characterized in that**,
owing to the milled-out portion (10), a connecting section (11) which is elastic in the z direction (z) is formed in the form of an elastic lug or an elastic tongue, to which connecting section a coil end piece (7) of the stator winding (6), which piece extends in the z direction (z), is directly welded.

2. Electric machine according to Claim 1, **characterized in that** a sensor (12) for measuring current is soldered onto the connecting section (11).

3. Electric machine according to Claim 2, **characterized in that** the sensor (12) comprises a copper strip or a shunt.

4. Electric machine according to one of Claims 1 to 3, **characterized in that** a further sensor (13) for measuring temperature is soldered onto the connecting section (11).

5. Electric machine according to Claim 4, **characterized in that** the further sensor (13) comprises an NTC temperature sensor or an SMD temperature sensor.

6. Electric machine according to Claim 3, **characterized in that** the copper strip or shunt projects beyond the connecting section (11) and is welded to the coil end piece (7).

## Revendications

1. Machine électrique (1) comprenant
- un moteur électrique (2) qui possède un rotor (4) pouvant tourner autour d'un axe longitudinal (L) du moteur électrique (2) et un stator (5), le stator (5) possédant un enroulement de stator (6) et des bornes de phase comportant des embouts d'enroulement (7), lesquels suivent un tracé dans une direction z (z) parallèle à l'axe longitudinal (L) du moteur électrique (2),
- un onduleur (3) qui possède une platine (8) sur laquelle se trouve un étage de puissance (9) de l'onduleur (3) et
- une liaison entre l'enroulement de stator (6) et la platine (8), la platine (8) possédant un rognage à la fraise (10),
**caractérisée en ce que**
une portion de liaison (11) élastique dans la direction z (z) sous la forme d'une patte élastique ou d'une languette élastique est formée par le rognage à la fraise (10), avec laquelle est soudé directement un embout d'enroulement (7) de l'enroulement de stator (6), qui s'étend dans la direction z (z).

2. Machine électrique selon la revendication 1, **caractérisée en ce qu'**un capteur (12) destiné à la mesure du courant est brasé à la portion de liaison (11).

3. Machine électrique selon la revendication 2, **caractérisée en ce que** le capteur (12) comporte une bande de cuivre ou un shunt.

4. Machine électrique selon l'une des revendications 1 à 3, **caractérisée en ce qu'**un capteur supplémentaire (13) destiné à la mesure de température est brasé à la portion de liaison (11).

5. Machine électrique selon la revendication 4, **caractérisée en ce que** le capteur supplémentaire (13) comporte un capteur de température à CTN ou un capteur de température CMS.

6. Machine électrique selon la revendication 3, **caractérisée en ce que** la bande de cuivre ou le shunt fait saillie au-dessus de la portion de liaison (11) et est soudé avec l'embout d'enroulement (7).
